(19) Europäisches Patentamt
European Patent Office
Office européen des brevets

(11) **EP 1 806 244 B1**

(12) **FASCICULE DE BREVET EUROPEEN**

(45) Date de publication et mention
de la délivrance du brevet:
**13.06.2012 Bulletin 2012/24**

(51) Int Cl.:
***B60C 23/04*** *(2006.01)*

(21) Numéro de dépôt: **06126710.0**

(22) Date de dépôt: **20.12.2006**

(54) **Procédé de traitement des données d'un système de surveillance des pneumatiques d'un véhicule**

Verfahren zur Verarbeitung von Daten von einem Überwachungssystem für Reifen eines Fahrzeugs

Method of processing data of a system for monitoring the tyres of a vehicle

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **05.01.2006 FR 0600142**

(43) Date de publication de la demande:
**11.07.2007 Bulletin 2007/28**

(73) Titulaires:
- **Société de Technologie Michelin**
  **63000 Clermont-Ferrand (FR)**
- **Michelin Recherche et Technique S.A.**
  **1763 Granges-Paccot (CH)**

(72) Inventeur: **Bondu, Lucien**
  **63800, La Roche Noire (FR)**

(74) Mandataire: **Dequire, Philippe Jean-Marie Denis**
  **23, Place des Carmes-Déchaux**
  **SGD/LG/PI F35 Ladoux**
  **63040 Clermont-Ferrand Cedex 09 (FR)**

(56) Documents cités:
**US-A- 5 780 733      US-A- 5 825 286**
**US-A1- 2003 074 961      US-A1- 2005 044 945**

EP 1 806 244 B1

## Description

La présente invention se rapporte aux systèmes de surveillance des pneumatiques. Plus particulièrement, elle concerne l'exploitation des mesures faites sur les pneumatiques en vue de donner une ou plusieurs alarmes.

De très nombreux dispositifs, tels ceux des brevets US 4 703 650 et US 5 825 286 ont été proposés pour transmettre à une unité centrale de façon régulière des mesures de pression de gonflage de chaque pneumatique accompagnées, le cas échéant, de mesures de la température de l'air interne des pneumatiques.

Mais, la connaissance des pressions de gonflage ne suffit pas pour donner au conducteur une information fiable et utile. La consultation permanente de ces indications risque plus d'être fastidieuse que réellement utile. En effet, les mesures de pression et/ou de température des pneumatiques varient énormément en roulage en raison de l'échauffement des pneumatiques dû à ses pertes hystérétiques, de l'influence de la chaleur dégagée par les freins et des transferts de charge qui provoquent de légères variations du volume des pneumatiques.

C'est pourquoi on a proposé, dans le brevet US 4 893 110 un procédé d'exploitation des mesures basé sur des comparaisons entre deux ou plus de deux pneumatiques qui vise à pouvoir donner une alarme en cas de défaillance d'un pneumatique sans adopter des seuils d'alerte s'écartant trop de la précision atteinte par les dispositifs de mesure.

Ce traitement, en dépit de son intérêt, n'a pas résolu complètement le problème. En effet, l'amélioration de la précision de la détection en cas de défaillance d'un pneumatique nécessite que les pressions initiales des pneumatiques soient rigoureusement identiques. Dans la réalité, tel n'est pas du tout le cas et il est tout à fait usuel et normal d'observer des différences de pression de gonflage à froid de l'ordre de 10% voire 15%. C'est d'ailleurs la plage acceptée par l'Organisation Technique Européenne du Pneumatique et de la Jante (ETRTO) en poids lourd, pour exemple. Ces différences sont dues notamment à la précision des manomètres de gonflage de l'ordre de 5%, aux imprécisions lors du gonflage de l'ordre de 3%, aux conséquences de l'ensoleillement de l'un des pneumatiques, etc. Le procédé décrit dans la demande citée ne peut donc pas avoir une précision de détection meilleure que les écarts initiaux usuels si l'on ne veut pas induire de nombreuses fausses alarmes. En conséquence, une détection de la défaillance de l'un des pneumatiques ne peut être faite qu'après une diminution très notable de la pression de gonflage du pneumatique ce qui impose une action de réparation immédiate.

La demande EP 0786361A propose un procédé de détection d'une fuite lente de l'un des pneumatiques d'un véhicule dans lequel on suit la variation dans le temps des écarts de pression entre deux pneumatiques adjacents et l'on déclenche une alarme lorsque cette variation dépasse un seuil donné.

Ce procédé permet effectivement de détecter très tôt une fuite lente d'un pneumatique, mais il se révèle inefficace lorsqu'une fuite affecte de façon similaire les deux pneumatiques suivis. Il peut donc être utile de le compléter par un procédé basé sur l'exploitation des mesures faites sur un seul pneumatique.

L'invention a pour objet un autre procédé d'exploitation des signaux de mesure d'un système de surveillance des pneumatiques qui détecte de façon précoce et en roulage toute défaillance de l'un des pneumatiques.

L'invention a pour objet un procédé de traitement des données d'un système de surveillance des pneumatiques d'un véhicule, le système fournissant régulièrement pour au moins un pneumatique des valeurs de la pression et de la température du fluide de la cavité interne du pneumatique, dans lequel, pour un pneumatique donné :

■ pour une première période de temps donnée, dite période de référence :

- un dispositif répartit par classes de températures $[T]_i$ l'ensemble des valeurs de pression et de températures du pneumatique fournies pendant la période de référence ; et
- pour chaque classe de température $[T]_i$, le dispositif calcule la pression moyenne $(\overline{p_{i,r}})$ des valeurs de pression correspondantes ;

■ pour au moins une seconde période de temps donnée, dite période j :

- le dispositif répartit par classes de températures $[T]_i$ l'ensemble des valeurs de pression et de température du pneumatique fournies pendant la période de temps j;
- pour chaque classe de température, le dispositif calcule la pression moyenne $(\overline{p_{i,j}})$ des valeurs de pression correspondantes ;
- pour chaque classe de température, le dispositif calcule l'écart entre la pression moyenne et la pression moyenne de référence $(\Delta p_{i,j} = \overline{p_{i,j}} - \overline{p_{i,j}})$ ; et
- le dispositif calcule la valeur moyenne des écarts entre les pressions moyennes et les pressions moyennes de référence $\overline{\Delta p_j}$.

Ce procédé permet de s'affranchir de la dispersion des données transmises par le système de surveillance du pneumatique en pratiquant deux moyennes successives.

Avantageusement, le dispositif déclenche une alarme lorsque les moyennes des écarts satisfont une relation donnée.

Dans le cas où une classe de température $[T]_i$ donnée est vide pour la période de référence alors que

cette classe [T]$_i$ ne l'est pas pour les périodes j et k, pour la période k, postérieure à la période j, de préférence, le dispositif :

■ calcule la pression moyenne ($\overline{p_{i,k}}$) des valeurs de pression de la classe [T]$_i$ et de la période k ;
■ calcule l'écart entre cette pression moyenne et la pression moyenne de la classe [T]$_i$ de la période j ($\Delta p_{i,k} = \overline{p_{i,k}} - \overline{p_{i,j}}$) ;
■ corrige l'écart de pression moyenne de la classe de température [T]$_i$ en ajoutant la valeur moyenne des écarts entre les pressions moyennes et les pressions moyennes de référence $\overline{\Delta p_j}$ obtenue pour la

période j, soit $\Delta p_{i,k}^c = \overline{p_{i,k}} - \overline{p_{i,j}} + \overline{\Delta p_j}$ ; et

■ le dispositif calcule la valeur moyenne desdits écarts et écarts corrigés entre lesdites pressions moyennes et lesdites pressions moyennes de référence $\Delta p_k$.

Ces étapes permettent d'appliquer le procédé de l'invention pour toutes les températures de fonctionnement qui ne sont pas apparues pendant la première période dite de référence.

Avantageusement, le dispositif calcule la valeur moyenne des écarts de pression $\overline{\Delta p_j}$ pour n périodes de temps successives, en prenant comme période de référence la période de temps la plus ancienne, et déclenche une alarme lorsque l'évolution dans le temps des valeurs moyennes de ces écarts de pression satisfait une relation donnée.

A titre d'exemple, le dispositif peut déclencher une alarme lorsque la variation dans le temps des valeurs moyennes de ces écarts de pression dépasse, en valeur absolue, un seuil S donné.

Ce seuil S peut être compris entre 3 et 10 % de la valeur nominale de la pression de gonflage du pneumatique considéré.

Selon un mode de mise en oeuvre préférentiel, le dispositif calcule plusieurs séries de valeurs moyennes d'écarts de pression pour des périodes de temps de durées différentes pour couvrir l'ensemble des gammes usuelles de dégonflement des pneumatiques des véhicules. Ces périodes peuvent avoir des durées comprises entre une heure et plusieurs jours.

De préférence, pour améliorer la précision de la détection, le procédé selon l'invention peut ne prendre en compte que les valeurs de températures et de pressions fournies pour une période de temps donnée entre la température maximale fournie et une température inférieure donnée. Cette température inférieure peut être égale à la température maximale diminuée de 20˚C.

De même, le procédé selon l'invention peut, pour chaque période de temps, effectuer une analyse statistique des données de température et de pression fournies et ne prendre en compte la période de temps considérée que si la dispersion des mesures est inférieure à un seuil donné.

L'analyse statistique peut simplement être une régression linéaire et la période de temps peut n'être pas prise en compte lorsque le coefficient de régression des données considérées est inférieur à 0,7.

Lorsque le véhicule considéré est un véhicule de génie civil, la période de temps choisie comprend la journée.

L'invention a aussi pour objet un dispositif pour la mise en oeuvre du procédé selon l'invention, comportant :

■ au moins un accès aux données à traiter ;
■ au moins une unité de calcul, permettant les classements et calculs ; et
■ des instructions de mise en oeuvre, permettant d'exécuter le procédé.

Ce dispositif est préférentiellement apte à coopérer avec un moyen de présentation des résultats.

L'invention a aussi pour objet un logiciel comprenant des éléments de code programmés pour la mise en oeuvre du procédé selon l'invention, lorsque le logiciel est chargé dans un système informatique et exécuté par le système informatique.

L'invention s'étend aussi à un logiciel sous forme de produit enregistré sur un support lisible par un système informatique, comprenant des éléments de code programmés selon le procédé de l'invention.

L'invention sera mieux comprise à la lecture de la description qui va suivre, donnée uniquement à titre d'exemple et dans le cas d'un véhicule génie civil. Cette description se réfère aux dessins dans lesquels :

- la figure 1 présente un schéma simplifié d'un système de surveillance des pneumatiques d'un véhicule avec un dispositif de mise en oeuvre du procédé de l'invention ;
- la figure 2 est un organigramme simplifié du procédé selon l'invention ;
- la figure 3 présente les valeurs de pression et de température fournies pendant plusieurs périodes de temps successives (après un premier dépouillement) ; et
- la figure 4 présente l'évolution des valeurs moyennes des écarts de pression pour les périodes de temps successives correspondant aux données de la figure 3.

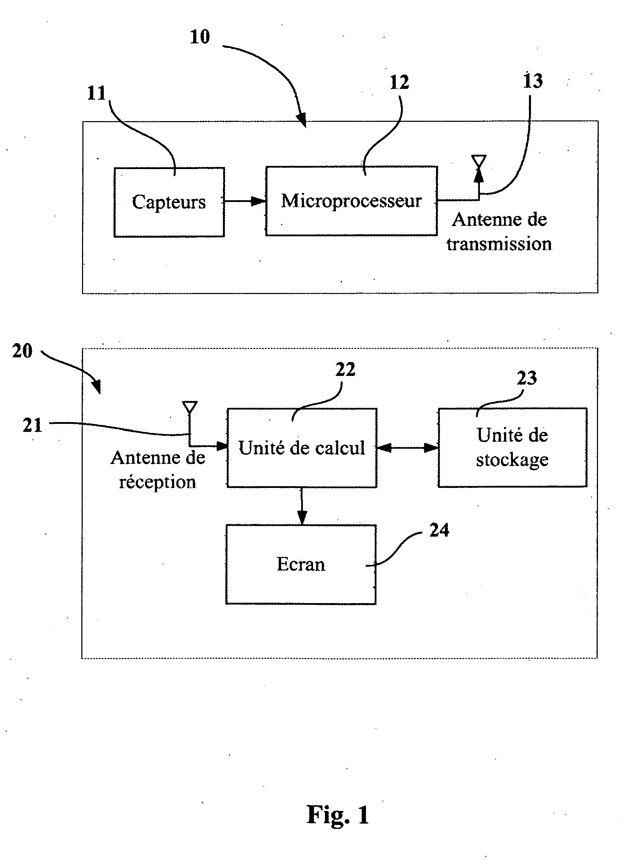

La figure 1 présente un schéma simplifié d'un système de surveillance des pneumatiques d'un véhicule avec un dispositif de mise en oeuvre du procédé de l'invention. Ce système de surveillance comprend, dans sa forme la plus simple, un module électronique 10 et un dispositif 20 de traitement et de présentation des données. Le module électronique est disposé dans la cavité intérieure de chacun des pneumatiques du véhicule concerné. A titre d'exemple, dans le cas d'un véhicule génie civil, ce module électronique peut être fixé sur la surface intérieure du pneumatique au moyen d'un patch caoutchouteux. Le dispositif 20 peut être disposé dans le châssis du véhicule. Ce dispositif peut aussi être extérieur au véhicule.

Chaque module électronique 10 comprend principalement des capteurs 11, pour mesurer dans la cavité interne du pneumatique au moins la pression et la température du fluide interne, un microprocesseur 12 pour gérer les mesures et les prétraiter et une antenne de transmission 13 des données mesurées. Ce module électronique comprend aussi des moyens d'alimentation en énergie appropriés, non représentés.

Le dispositif 20 de traitement et de présentation des données comprend principalement une antenne de réception 21 pour recevoir, par exemple par radio, les données émises par chaque module électronique 10, une unité de calcul 22 pour effectuer les traitements des données, une unité de stockage 23 et une unité de présentation des résultats par exemple un écran 24. Le dispositif 20 comprend aussi un logiciel comprenant des éléments de code programmés pour la mise en oeuvre du procédé selon l'invention chargé dans l'unité de calcul 22.

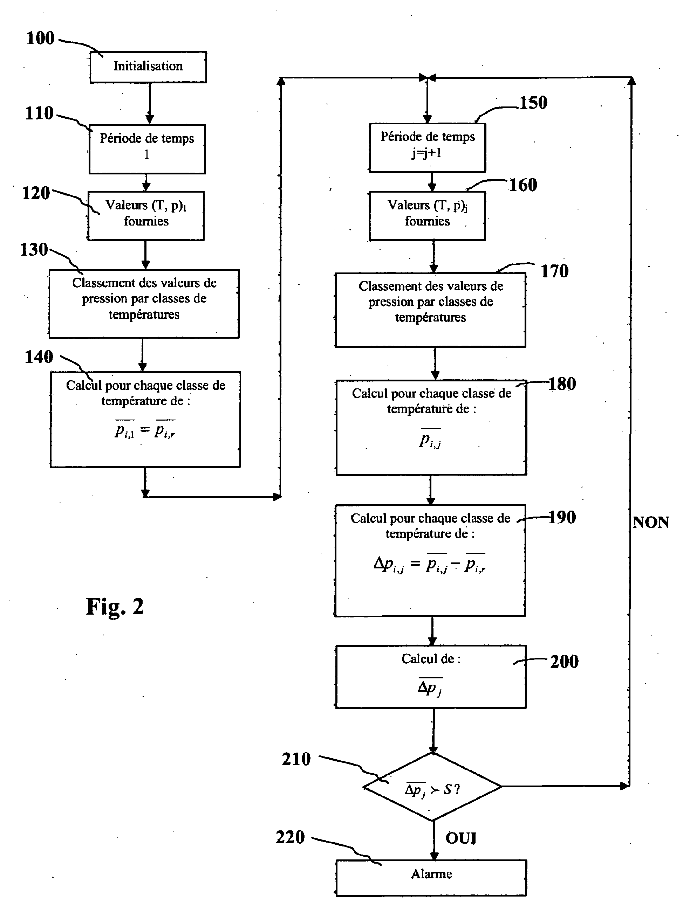

La figure 2 présente un organigramme simplifié du procédé de traitement des données émises périodiquement par les modules électroniques 10 au dispositif 20. Les données transmises comprennent notamment les valeurs de pression et de température, l'heure à laquelle les mesures ont été effectuées et un code d'identification du module électronique émetteur.

L'étape 100 est une étape d'initialisation. A l'étape 110, on considère une première période de temps dite période 1. On peut choisir cette période 1 comme période de référence.

A l'étape 120, le calculateur identifie l'ensemble des valeurs de pression et de température reçues par le dispositif 20 pendant cette première période de temps 1.

Puis le calculateur 22 classe l'ensemble des valeurs de pression reçues par classes de températures (étape 130) et calcule pour chaque classe de température $[T_i]$ la valeur moyenne des pressions correspondantes $\overline{p_{i,1}}$ et stocke dans l'unité de stockage 23 ces valeurs de pressions moyennes choisies comme pressions moyennes de référence : $\overline{p_{i,1}} = \overline{p_{i,r}}$ (étape 140).

A l'étape 150, on considère une période de temps suivante quelconque j.

A l'étape 160, le calculateur 22 considère l'ensemble des valeurs de pression et de température reçues correspondant à cette période de temps j et classe les valeurs de pression par classes de températures $[T_i]$ (étape 170). Puis, comme précédemment, il calcule pour chaque classe de température la valeur moyenne des valeurs de pression reçues $\overline{p_{i,j}}$ (étape 180) et les met en mémoire dans l'unité de stockage 23.

Le calculateur calcule ensuite à l'étape 190 l'écart entre ces pressions moyennes $\overline{p_{i,j}}$ correspondant à la période de temps j et les pressions moyennes de référence $\overline{p_{i,r}}$ correspondant aux pressions moyennes obtenues lors de la période de temps 1 choisie comme période de référence soit : $\Delta p_{i,j} = \overline{p_{i,j}} - \overline{p_{i,r}}$

À l'étape 200, le calculateur calcule la valeur moyenne des écarts entre les pressions moyennes et les pressions moyennes de référence : $\overline{\Delta p_j}$.

À l'étape 210, le calculateur compare la valeur moyenne des écarts $\overline{\Delta p_j}$ à un seuil $S$ donné. Ce seuil est de l'ordre de 3 à 10 % de la pression de gonflage préconisée. Et, si le résultat de la comparaison est positif, le calculateur déclenche une alarme.

Si le résultat est négatif, le calculateur considère la période de temps suivante à l'étape 150.

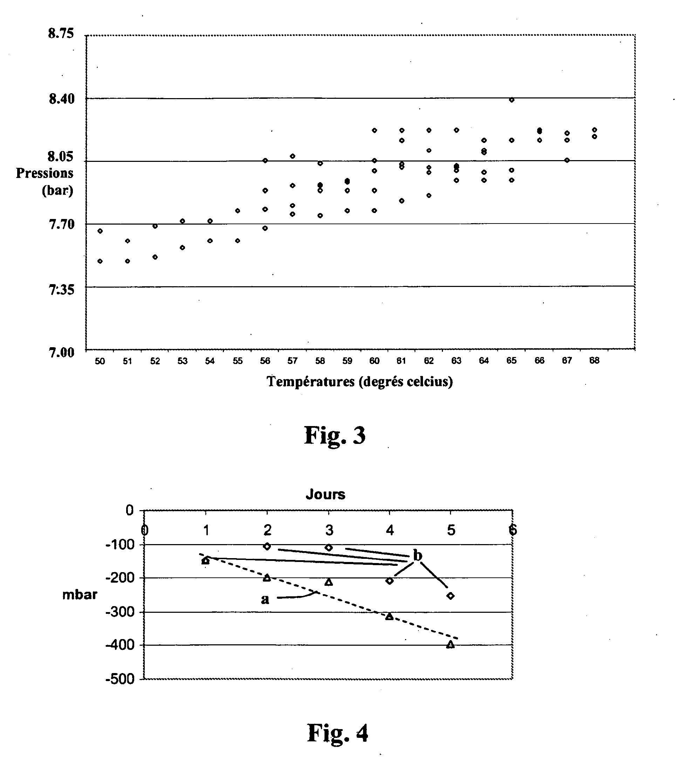

Un véhicule génie civil a été équipé d'un dispositif de mesure et d'enregistrement des pressions et des températures de la cavité interne de l'un de ses pneumatiques. La figure 3 présente l'ensemble des couples de valeurs de pression et de température enregistrées par le dispositif précédent pendant une période de six jours consécutifs après un premier dépouillement.

Chaque point correspond à la valeur moyenne des mesures de pression enregistrées pour une période de temps donnée et une plage de température donnée.

On constate que ces mesures présentent une forte amplitude à la fois en températures et en pressions.

La figure 4 présente le résultat du traitement des données de la figure 3 selon le procédé selon l'invention. On constate qu'au bout de cinq jours, en prenant comme période de référence le premier jour d'enregistrement des données, une diminution significative de 400 mbar en moyenne est identifiée et cette diminution est bien due à une fuite du pneumatique. La diminution de pression de gonflage est sensiblement linéaire (courbe a).

Cette valeur de 400 mbar est de l'ordre de 5 % de la pression préconisée en fonctionnement de ce pneumatique dans les conditions de travail correspondante soit 8 bar.

La figure 4 montre aussi les résultats obtenus (points b) lorsque l'on considère la moyenne des écarts de pression sans les corriger tel qu'indiqué dans le procédé selon l'invention. On détecte bien une diminution de pression, mais beaucoup plus dispersée et d'amplitude plus faible.

Le procédé selon l'invention permet ainsi de détecter de façon fiable des fuites très lentes, d'un ordre de grandeur beaucoup plus faible que les amplitudes observées en fonctionnement des pressions de gonflage d'un pneumatique. Ce procédé est particulièrement utile dans le cas de pneumatiques de très grosse taille, tels des pneumatiques génie civil.

L'invention n'est pas limitée aux exemples décrits et représentés et diverses modifications peuvent y être apportées sans sortir de son cadre défini par les revendications annexées.

**Revendications**

1. Procédé de traitement des données d'un système de surveillance des pneumatiques d'un véhicule, ledit système fournissant régulièrement pour au moins un pneumatique des valeurs de la pression et de la température du fluide de la cavité interne dudit pneumatique, dans lequel, pour un pneumatique donné :

   ■ pour une première période de temps donnée, dite période de référence :

   • un dispositif répartit par classes de températures $[T]_i$ l'ensemble desdites valeurs de pression et de températures dudit pneumatique fournies pendant ladite période de référence ; et
   • pour chaque classe de température $[T]_i$, ledit dispositif calcule la pression moyenne $(\overline{p_{i,r}})$ desdites valeurs de pression correspondantes ;

   ■ pour au moins une seconde période de temps donnée, dite période j :

   • ledit dispositif répartit par classes de températures $[T]_i$ l'ensemble desdites valeurs de pression et de température dudit pneumatique fournies pendant ladite période de temps j ;
   • pour chaque classe de température, ledit dispositif calcule la pression moyenne $(\overline{p_{i,j}})$ desdites valeurs de pression correspondantes ;
   • pour chaque classe de température, ledit dispositif calcule l'écart entre ladite pression moyenne et ladite pression moyenne de référence $(\Delta p_{i,j} = \overline{p_{i,j}} - \overline{p_{i,r}})$; et
   • ledit dispositif calcule la valeur moyenne desdits écarts entre lesdites pressions moyennes et lesdites pressions moyennes de référence $\overline{\Delta p_j}$.

2. Procédé selon la revendication 1, dans lequel, si une classe de température $[T]_i$ donnée est vide pour la période de référence alors que ladite classe $[T]_i$ ne l'est pas pour les périodes j et k, pour ladite période k, postérieure à ladite période j, ledit dispositif :

   ■ calcule la pression moyenne $(\overline{p_{i,k}})$ desdites valeurs de pression de ladite classe $[T]_i$ et de ladite période k ;
   ■ calcule l'écart entre ladite pression moyenne et ladite pression moyenne de ladite classe $[T]_i$ de ladite période j $(\Delta p_{i,k} = \overline{p_{i,k}} - \overline{p_{i,j}})$;
   corrige ledit écart de pression moyenne de la classe de température $[T]_i$ en ajoutant la valeur moyenne des écarts entre lesdites pressions moyennes et lesdites pressions moyennes de référence $\overline{\Delta p_j}$ obtenue pour la période j, soit

   $$\Delta p^c_{i,k} = \overline{p_{i,k}} - \overline{p_{i,j}} + \overline{\Delta p_j} \; ; \quad \text{et}$$

   ■ ledit dispositif calcule la valeur moyenne desdits écarts et écarts corrigés entre lesdites pressions moyennes et lesdites pressions moyennes de référence $\overline{\Delta p_k}$.

3. Procédé selon l'une des revendications 1 et 2, dans lequel ledit dispositif calcule la valeur moyenne desdits écarts de pression $\overline{\Delta p_j}$ pour n périodes de temps successives, en prenant comme période de référence la période de temps la plus ancienne, et déclenche une alarme lorsque l'évolution dans le temps desdites valeurs moyennes desdits écarts de pression satisfait une relation donnée.

4. Procédé selon la revendication 3, dans lequel le dispositif déclenche une alarme lorsque la variation dans le temps desdites valeurs moyennes desdits écarts de pression dépasse, en valeur absolue, un seuil S donné.

5. Procédé selon la revendication 4, dans lequel ledit seuil S est compris entre 3 et 10 % de la valeur nominale de pression.

6. Procédé selon l'une des revendications 3 à 5, dans lequel le dispositif calcule plusieurs séries de valeurs moyennes d'écarts de pression pour des de périodes temps de durées différentes pour couvrir l'ensemble des gammes usuelles de dégonflement des pneumatiques des véhicules.

7. Procédé selon la revendication 6, dans lequel la durée des périodes de temps couvre de l'ordre de l'heure à plusieurs jours.

8. Procédé selon l'une des revendications 1 à 7, dans lequel ledit dispositif, pour une période de temps donnée, prend en compte les valeurs de températures et de pressions fournies par le système entre la température maximale fournie et une température inférieure donnée.

9. Procédé selon la revendication 8, dans lequel la température inférieure est égale à la température maximale diminuée de 20˚C.

10. Procédé selon l'une des revendications 1 à 9, dans lequel pour chaque période de temps, le dispositif effectue une analyse statistique des données de température et de pression fournies et ne prend en compte ladite période de temps que si la dispersion desdites mesures est inférieure à un seuil donné.

**11.** Procédé selon la revendication 10, dans lequel ladite analyse statistique est une régression linéaire.

**12.** Procédé selon la revendication 11, dans lequel ladite période de temps n'est pas prise en compte lorsque le coefficient de régression desdites données est inférieur à 0,7.

**13.** Procédé selon l'une des revendications 1 à 12, dans lequel, ledit véhicule étant un véhicule de génie civil, la période de temps comprend la journée.

**14.** Dispositif pour la mise en oeuvre du procédé selon l'une des revendications 1 à 13, comportant :

■ au moins un accès aux données à traiter ;
■ au moins une unité de calcul, permettant les classements et calculs ; et
■ des instructions de mise en oeuvre, permettant d'exécuter ledit procédé.

**15.** Dispositif selon la revendication 14, tel qu'il est apte à coopérer avec un moyen de présentation des résultats.

**16.** Logiciel comprenant des éléments de code programmés pour la mise en oeuvre du procédé selon l'une quelconque des revendications 1 à 13, lorsque ledit logiciel est chargé dans un système informatique et exécuté par ledit système informatique.

**17.** Logiciel sous forme de produit enregistré sur un support lisible par un système informatique, comprenant des éléments de code programmés selon la revendication 16.

**Claims**

**1.** Method of processing the data from a vehicle tyre monitoring system, the said system regularly supplying for at least one tyre values of the pressure and temperature of the fluid in the internal cavity of the said tyre, in which, for a given tyre:

■ for a first given period of time, referred to as the reference period:

• a device divides up, by class of temperature $[T]_i$, all the said tyre pressure and temperature values of the said tyre supplied during the said reference period; and
• for each class of temperature $[T]_i$, the said device calculates the mean pressure $(\overline{p_{i,r}})$ of the said corresponding pressure values:

■ for at least a second given period of time, referred to as period j:

• the said device divides up by class of temperature $[T]_i$ all the said tyre pressure and temperature values supplied during the said period of time j;
• for each class of temperature, the said device calculates the mean pressure $(\overline{p_{i,j}})$ of the said corresponding pressure values;
• for each class of temperature, the said device calculates the difference between the said mean pressure and the said reference mean pressure $(\Delta p_{i,j} = \overline{p_{i,j}} - \overline{p_{i,r}})$; and
• the said device calculates the mean value of the said differences between the said mean pressures and the mean reference pressures $\overline{\Delta p_j}$.

**2.** Method according to claim 1, in which, if a given temperature class $[T]_i$ is empty for the rest of this period while the said class $[T]_i$ is not empty for the periods j and k, for the said period k, subsequent to the said period j, the said device:

■ calculates the mean pressure $(\overline{p_{i,k}})$ of the said pressure values of the said class $[T]_i$ and of the period k;
■ calculates the difference between the said mean pressure and the said mean pressure of the class $[T]_i$ of the said period j $(\Delta p_{i,k} = \overline{p_{i,k}} - \overline{p_{i,j}})$;
■ corrects the said mean pressure difference of the temperature class $[T]_i$ by adding the mean value of the differences between the said mean pressures and the said reference mean pressures $\overline{\Delta p_j}$ obtained for the period j, that is to say

$$\Delta p_{i,k}^{c} = \overline{p_{i,k}} - \overline{p_{i,j}} + \overline{\Delta p_j} \;; \text{ and}$$

■ the said device calculates the mean value of the said differences and corrected differences between the said mean pressures and the said reference mean pressures $\overline{\Delta p_k}$.

**3.** Method according to one of claims 1 and 2, in which the said device calculates the mean value of the said pressure differences $\overline{\Delta p_j}$ for n successive periods of time, taking the oldest period of time as the reference period, and triggers an alarm when the change over time in the said mean values of the said pressure differences satisfies a given relationship.

**4.** Method according to claim 3, in which the device triggers an alarm when the variation over time of the said mean values of the said pressure differences exceeds, in absolute value, a given threshold S.

**5.** Method according to claim 4, in which the said threshold S is between 3% and 10% of the nominal pressure value.

**6.** Method according to one of claims 3 to 5, in which the device calculates several series of mean values of pressure differences for periods of time of different durations in order to cover all the usual deflation ranges of the vehicle tyres.

**7.** Method according to claim 6, in which the duration of the periods of time covers around one hour to several days.

**8.** Method according to one of the claims 1 to 7, in which the said device, for a given period of time, takes into account the temperature and pressure values supplied by the system between the maximum temperature supplied and a given lower temperature.

**9.** Method according to claim 0, in which the lower temperature is equal to the maximum temperature reduced by 20˚C.

**10.** Method according to one of claims 1 to 9, in which, for each period of time, the device performs a statistical analysis of the temperature and pressure data supplied and takes the said period of time into account only if the scatter in the said measurements is below a given threshold.

**11.** Method of according to claim 10, in which the said statistical analysis is a linear regression.

**12.** Method according to claim 11, in which the period of time is not taken into account when the regression coefficient of the said data is less than 0.7.

**13.** Method according to one of claims 1 to 12, in which, the said vehicle being a construction vehicle, the period of time comprises one day.

**14.** Device for implementing the method according to one of claims 1 to 13, comprising:

■ at least one access to the data to be processed;
■ at least one calculation unit, permitting classifications and calculations; and
■ instructions for use, enabling the method to be executed.

**15.** Device according to claim 14, as able to cooperate with a means of presenting the results.

**16.** Software comprising code elements programmed for implementing the method according to any one of claims 1 to 13, when the said software is loaded into a computer system and executed by the said computer system.

**17.** Software in the form of a product recorded on a medium that can be read by a computer system, comprising code elements programmed according to claim 16.

**Patentansprüche**

**1.** Verfahren zur Verarbeitung der Daten eines Überwachungssystems der Luftreifen eines Fahrzeugs, wobei das System regelmäßig für mindestens einen Luftreifen Werte des Drucks und der Temperatur des Fluids des Innenhohlraums des Luftreifens liefert, bei dem für einen gegebenen Luftreifen:

• für einen ersten gegebenen Zeitraum, Bezugszeitraum genannt:

• eine Vorrichtung die Gesamtheit der Druck- und Temperaturwerte des Luftreifens, die während des Bezugszeitraums geliefert werden, in Temperaturklassen $[T]_i$ aufteilt; und
• die Vorrichtung für jede Temperaturklasse $[T]_i$ den mittleren Druck ($\overline{p_{i,r}}$) der entsprechenden Druckwerte berechnet;

• für mindestens einen zweiten gegebenen Zeitraum, Zeitraum j genannt:

• die Vorrichtung die Gesamtheit der Druck- und Temperaturwerte des Luftreifens, die während des Zeitraums j geliefert werden, in Temperaturklassen $[T]_i$ aufteilt;
• die Vorrichtung für jede Temperaturklasse den mittleren Druck ($\overline{p_{i,j}}$) der entsprechenden Druckwerte berechnet;
• die Vorrichtung für jede Temperaturklasse die Abweichung zwischen dem mittleren Druck und dem mittleren Bezugsdruck ($\Delta p_{i,j} = \overline{p_{i,j}} - \overline{p_{i,r}}$) berechnet; und
• die Vorrichtung den Mittelwert der Abweichungen zwischen den mittleren Drücken und den mittleren Bezugsdrücken $\overline{\Delta p_j}$ berechnet.

**2.** Verfahren nach Anspruch 1, bei dem, wenn eine gegebene Temperaturklasse $[T]_i$ für den Bezugszeitraum leer ist, während die Klasse $[T]_i$ es für die Zeiträume j und k nicht ist, die Vorrichtung für den Zeitraum k nach dem Zeitraum j:

• den mittleren Druck ($\overline{p_{i,k}}$) der Druckwerte der Klasse $[T]_i$ und des Zeitraums k berechnet;
• die Abweichung zwischen dem mittleren Druck und dem mittleren Druck der Klasse $[T]_i$ des Zeitraums j ($\Delta p_{i,k} = \overline{p_{i,k}} - \overline{p_{i,j}}$) berechnet;
• die mittlere Druckabweichung der Tempera-

turklasse $[T]_i$ korrigiert, indem sie den Mittelwert der Abweichungen zwischen den mittleren Drücken und den mittleren Bezugsdrücken $\overline{\Delta p_j}$ hinzufügt, der für den Zeitraum j erhalten wird, nämlich $\Delta p_{i,k}^{c} = \overline{p_{i,k}} - \overline{p_{i,j}} + \overline{\Delta p_j}$ ; und

• die Vorrichtung den Mittelwert der Abweichungen und korrigierten Abweichungen zwischen den mittleren Drücken und den mittleren Bezugsdrücken $\overline{\Delta p_k}$ berechnet.

3. Verfahren nach einem der Ansprüche 1 und 2, bei dem die Vorrichtung den Mittelwert der Druckabweichungen $\overline{\Delta p_j}$ für n aufeinanderfolgende Zeiträume berechnet, indem sie als Bezugszeitraum den ältesten Zeitraum nimmt, und einen Alarm auslöst, wenn die zeitliche Entwicklung der Mittelwerte der Druckabweichungen eine gegebene Beziehung erfüllt.

4. Verfahren nach Anspruch 3, bei dem die Vorrichtung einen Alarm auslöst, wenn die zeitliche Veränderung der Mittelwerte der Druckabweichungen im Absolutwert einen gegebenen Schwellwert S überschreitet.

5. Verfahren nach Anspruch 4, bei dem der Schwellwert S zwischen 3 und 10 % des Nenndruckwerts liegt.

6. Verfahren nach einem der Ansprüche 3 bis 5, bei dem die Vorrichtung mehrere Folgen von Mittelwerten von Druckabweichungen für Zeiträume unterschiedlicher Dauer berechnet, um die Gesamtheit der üblichen Luftverlustbereiche der Luftreifen der Fahrzeuge abzudecken.

7. Verfahren nach Anspruch 6, bei dem die Dauer der Zeiträume in der Größenordnung von einer Stunde bis zu mehreren Tagen abdeckt.

8. Verfahren nach einem der Ansprüche 1 bis 7, bei dem die Vorrichtung für einen gegebenen Zeitraum die vom System gelieferten Temperatur- und Druckwerte zwischen der gelieferten maximalen Temperatur und einer gegebenen niedrigeren Temperatur berücksichtigt.

9. Verfahren nach Anspruch 8, bei dem die niedrigere Temperatur gleich der maximalen Temperatur verringert um 20˚C ist.

10. Verfahren nach einem der Ansprüche 1 bis 9, bei dem die Vorrichtung für jeden Zeitraum eine statistische Analyse der gelieferten Temperatur- und Druckdaten durchführt und den Zeitraum nur berücksichtigt, wenn die Streuung der Messwerte unter einem gegebenen Schwellwert liegt.

11. Verfahren nach Anspruch 10, bei dem die statistische Analyse eine lineare Regression ist.

12. Verfahren nach Anspruch 11, bei dem der Zeitraum nicht berücksichtigt wird, wenn der Regressionskoeffizient der Daten geringer als 0,7 ist.

13. Verfahren nach einem der Ansprüche 1 bis 12, bei dem, wenn das Fahrzeug ein Baufahrzeug ist, der Zeitraum einen Tag enthält.

14. Vorrichtung zur Durchführung des Verfahrens nach einem der Ansprüche 1 bis 13, die aufweist:

   • mindestens einen Zugang zu den zu verarbeitenden Daten;
   • mindestens eine Recheneinheit, die die Klassierungen und Berechnungen ermöglicht; und
   • Durchführungsanweisungen, die die Ausführung des Verfahrens ermöglichen.

15. Vorrichtung nach Anspruch 14, derart, dass sie mit einer Einrichtung zur Anzeige der Ergebnisse zusammenwirken kann.

16. Software, die programmierte Codeelemente für die Durchführung des Verfahrens nach einem der Ansprüche 1 bis 13 enthält, wenn die Software in ein EDV-System geladen und von dem EDV-System ausgeführt wird.

17. Software in Form eines auf einem durch ein EDV-System lesbaren Träger gespeicherten Produkts, das programmierte Codeelemente nach Anspruch 16 enthält.

**10**

**11**    **12**    **13**

Capteurs → Microprocesseur

Antenne de
transmission

**20**

**21**

**22**    **23**

Antenne de
réception → Unité de calcul ↔ Unité de
stockage

Ecran    **24**

# Fig. 1

**100** — Initialisation

**110** — Période de temps 1

**120** — Valeurs $(T, p)_1$ fournies

**130** — Classement des valeurs de pression par classes de températures

**140** — Calcul pour chaque classe de température de :

$$\overline{p_{i,1}} = \overline{p_{i,r}}$$

**150** — Période de temps $j=j+1$

**160** — Valeurs $(T, p)_j$ fournies

**170** — Classement des valeurs de pression par classes de températures

**180** — Calcul pour chaque classe de température de :

$$\overline{p_{i,j}}$$

**190** — Calcul pour chaque classe de température de :

$$\Delta p_{i,j} = \overline{p_{i,j}} - \overline{p_{i,r}}$$

**200** — Calcul de :

$$\overline{\Delta p_j}$$

**210** — $\overline{\Delta p_j} \succ S$ ?

**NON**

**OUI**

**220** — Alarme

## Fig. 2

**Fig. 3**

**Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4703650 A
- US 5825286 A
- US 4893110 A
- EP 0786361 A